# EUROPÄISCHE PATENTSCHRIFT

(11) **EP 1 735 193 B1**
(45) Veröffentlichungstag und Bekanntmachung des Hinweises auf die Patenterteilung: **03.06.2009**
(21) Anmeldenummer: 05716687.8
(22) Anmeldetag: 14.02.2005
(51) Int. Cl.: B60S 1/04

(54) **SCHEIBENWISCHVORRICHTUNG, INSBESONDERE FÜR EIN KRAFTFAHRZEUG**
WINDSHIELD WIPER, ESPECIALLY FOR A MOTOR VEHICLE
SYSTEME D'ESSUIE-GLACE, NOTAMMENT POUR VEHICULE AUTOMOBILE

(30) Priorität: 06.04.2004 DE 102004016914
(43) Veröffentlichungstag der Anmeldung: 27.12.2006
(73) Patentinhaber: ROBERT BOSCH GMBH, 70442 Stuttgart (DE)
(72) Erfinder: LIPPS, Verena, 76534 Baden-Baden (DE); GEUBEL, Paul, 76534 Baden-Baden (DE)
(86) Internationale Anmeldenummer: PCT/EP2005/050635
(87) Internationale Veröffentlichungsnummer: WO 2005/097564

(56) Entgegenhaltungen:
- WO-A-00/06429
- WO-A-03/097419
- FR-A- 2 770 880
- FR-A- 2 842 154

## Beschreibung

### Stand der Technik

Die Erfindung geht von einer Scheibenwischvorrichtung, insbesondere für ein Kraftfahrzeug, nach dem Oberbegriff des Anspruchs 1 aus.

Es sind schon zahlreiche Scheibenwischvorrichtungen für Kraftfahrzeuge bekannt, die ein Antriebselement aufweisen, das an der Fahrzeugkarosserie befestigt ist. Typischerweise werden derartige Antriebselemente an der Fahrzeugkarosserie festgeschraubt, was jedoch sehr aufwändig ist und viele Teile, wie Schrauben, Schraubenmuttern und Unterlegscheiben usw. benötigt. Dies ist logistisch aufwändig und darüber hinaus komplex beim Einbau. Weiterhin ist aus der DE 100 62 617 A1 eine Scheibenwischvorrichtung bekannt, die in das Kraftfahrzeug eingeklebt ist, wobei der Klebstoff dämpfende Eigenschaften aufweist.

Aus der DE 198 33 404 A1 ist eine Scheibenwischanlage für Fahrzeuge, insbesondere Kraftfahrzeuge, bekannt, die eine verschraubungsfreie und damit einfach und schnell durchzuführende Montage ermöglicht. Hierzu weist die Scheibenwischanlage eine Tragkonstruktion für eine Antriebsvorrichtung auf. An der Tragkonstruktion ist eine Anzahl erster Befestigungselemente vorgesehen, die in eine erste Richtung von der Tragkonstruktion abragen. In eine zweite Richtung, die in einem Winkel zwischen 45 und 135 Grad zu der ersten Richtung verläuft, vorzugsweise in einem Winkel von 90 Grad, ragen eine Anzahl zweiter Befestigungselemente. Die Befestigungselemente sind als zylindrische Steckzapfen ausgebildet, die mit einem Ende mit der Tragkonstruktion verbunden sind und mit ihrem freien Ende in eine Aufnahmeöffnung eines gummielastischen Dämpfungselements gesteckt werden. Dieses ist in eine Montageöffnung der Fahrzeugkarosserie eingesetzt. Die Montageöffnung kann sich in einer abgewinkelten oder tief gezogenen Lasche befinden, die an der Fahrzeugkarosserie angeschweißt ist. Das freie Ende des Steckzapfens kann eine vorzugsweise konische Verdickung besitzen, um dasselbe in dem Dämpfungselement durch Verrasten festlegen zu können. Da die Montagerichtungen der ersten und zweiten Befestigungselemente unter einem Winkel verlaufen, ist es nicht ausgeschlossen, dass die Tragkonstruktion nach der Montage unter einer Spannung steht, die sich auf die angrenzenden Teile der Fahrzeugkarosserie überträgt.

Eine Scheibenwischvorrichtung gemäß Oberbegriff des Anspruchs 1 ist aus dem Dokument WO-A-03/097419 bekannt.

### Vorteile der Erfindung

Das Dämpfungselement ist fest mit dem Befestigungselement verbunden. Es ist in einer ersten Montagerichtung in die Aufnahmeöffnung einsetzbar und übergreift durch eine Bewegung in eine zweite Montagerichtung quer zur ersten den Rand der Aufnahmeöffnung mit einem Schlitz. Dieser ist in einem Bauteil angeordnet, das eine relativ zum Dämpfungselement harte Oberfläche aufweist und mit dem Dämpfungselement fest verbunden ist. Auf Grund des geringen Reibwerts zwischen der harten Oberfläche des Schlitzes und der Fahrzeugkarosserie ergeben sich geringe Montagekräfte in der zweiten Montagerichtung, sodass die erfindungsgemäße Scheibenwischvorrichtung ohne großen Kraftaufwand montiert werden kann. Damit der Rand der Aufnahmeöffnung leicht in den Schlitz eingeführt werden kann, besitzt dieser an seiner Öffnung eine Erweiterung.

Am Ende des zweiten Montagewegs muss die Scheibenwischvorrichtung in der Regel in der Endposition fixiert werden, damit sich das Befestigungselement mit dem Dämpfungselement nicht in entgegengesetzter Richtung wieder lösen kann. Zu diesem Zweck kann ein Arretierungselement, z.B. in Form eines Stifts oder einer Schraube, vorgesehen werden, das in der ersten Montagerichtung angeordnet ist und das Antriebselement mit der Fahrzeugkarosserie verbindet. Zweckmäßig weist es ebenfalls schwingungsdämpfende Maßnahmen auf. Dies bedeutet jedoch einen hohen Fertigungs- und Montageaufwand. Gemäß einer Ausgestaltung der Erfindung wird demgegenüber vorgeschlagen, dass der Bügel zwei im Wesentlichen parallel verlaufende Schenkel hat, die den Schlitz begrenzen, und von denen einer eine Rastnase aufweist, die in eine Öffnung des gegenüberliegenden Schenkels eingreift. Bei der Montage in der zweiten Montagerichtung wird die Rastnase am Rand der Aufnahmeöffnung durch das Karosserieblech zurückgedrückt und rastet bei Erreichen der Endposition in eine entsprechende Rastöffnung des Karosserieblechs ein. Um die Rastnase leicht zurückdrücken zu können, besitzt sie in der zweiten Montagerichtung eine flachere Flanke, während entgegen der zweiten Montagerichtung eine steilere Flanke der Rastnase dafür sorgt, dass die Endposition sicher verriegelt wird. Bei der Demontage kann die Rastnase von der flacheren Flanke aus mittels eines Schraubenziehers zurückgedrückt werden.

Gemäß einer weiteren Ausgestaltung der Erfindung besitzt der Bügel eine zweite Rastnase, die in der zweiten Montagerichtung hinter der ersten Rastnase liegt und mit zwei steilen, quer zur zweiten Montagerichtung verlaufenden Flanken in eine Öffnung des gegenüberliegenden Schenkels eingreift. Bei der Montage rastet die zweite Rastnase ebenfalls in ein Rastloch der Fahrzeugkarosserie ein. Während durch die flache Flanke der ersten Rastnase beide Rastnasen außer Eingriff gebracht werden, und die erste Rastnase die Scheibenwischvorrichtung in der Endposition grob positioniert, ist durch die zweite Rastnase eine exaktere Positionierung der Scheibenwischvorrichtung relativ zu dem entsprechenden Rastloch in der Fahrzeugkarosserie möglich. Hierbei weist die zweite Rastnase im Längsschnitt des Bügels in vorteilhafter Weise eine m-förmige oder w-förmige Gestalt auf.

Der Bügel, der zweckmäßigerweise aus Kunststoff oder Blech gefertigt ist, kann in einer Aussparung des Dämpfungselements eingepresst, eingeklebt, eingegossen oder einvulkanisiert oder formschlüssig gehalten sein. In vorteilhafter Weise ist der Schlitz des Bügels so auf die Dicke des Karosserieblechs oder einer Halterung abgestimmt, dass das Karosserieblech im montierten Zustand unter einer Vorspannung an den Innenseiten des Bügels anliegt.

Bei einer weiteren Ausgestaltung ist in eine Aussparung des Dämpfungselements ein Halteelement aus Kunststoff eingesetzt, das einen Schlitz für die Aufnahme des Karosserieblechs besitzt, wobei eine Seite des Schlitzes eine Rastnase aufweist, die in eine Vertiefung auf der gegenüberliegenden Seite des Schlitzes ragt. Das Halteelement kann in der zweiten Montagerichtung im Bereich des Schlitzes geteilt und mit seinen äußeren Seiten an dem Dämpfungselement befestigt sein. Wird der Schlitz über den Rand der Aufnahmeöffnung geschoben, werden die beiden Teile auseinander gedrückt, wobei das Dämpfungselement elastisch nachgibt. Bei Erreichen der Endlage rastet die Rastnase in eine entsprechende Rastöffnung der Fahrzeugkarosserie ein. Auch hierbei ist es zweckmäßig, dass sich der Schlitz an seinem äußeren Ende in der zweiten Montagerichtung erweitert.

### Zeichnungen

Weitere Vorteile ergeben sich aus der folgenden Zeichnungsbeschreibung. In der Zeichnung sind Ausführungsbeispiele der Erfindung dargestellt. Die Zeichnung, die Beschreibung und die Ansprüche enthalten zahlreiche Merkmale in Kombination. Der Fachmann wird die Merkmale zweckmäßigerweise auch einzeln betrachten und zu sinnvollen weiteren Kombinationen zusammenfassen.

Es zeigen:
- Fig. 1: eine Antriebsvorrichtung einer erfindungsgemäßen Scheibenwischvorrichtung in einer schematischen Dar- stellung,
- Fig. 2: einen Längsschnitt durch ein Befestigungselement ent- sprechend der Linie II-II in Fig. 3,
- Fig. 3: einen Schnitt entsprechend der Linie III-III in Fig. 1,
- Fig. 4: und Fig. 5 eine Variante zu Fig. 3 und
- Fig. 6: und Fig. 7 eine Variante zu Fig. 2 und Fig. 3.

### Beschreibung, der Ausführungsbeispiele

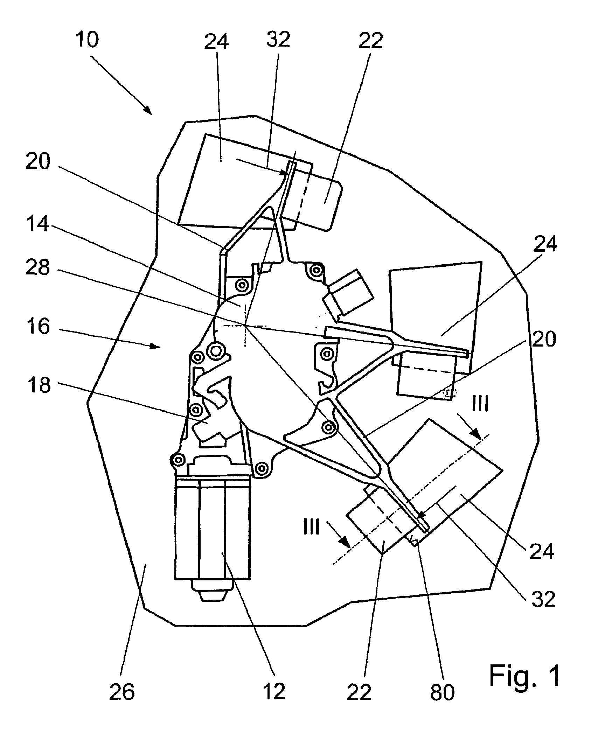

In Fig. 1 ist eine Scheibenwischvorrichtung 10 eines Heckscheibenwischers eines Kraftfahrzeugs in einer schematischen Darstellung gezeigt. Natürlich ist die Erfindung in keiner Weise auf Heckscheibenwischer beschränkt. Sie kann problemlos auf Frontscheibenwischer angewendet werden. Die Scheibenwischvorrichtung 10 umfasst einen Elektromotor 12 mit einem Getriebe 14, die zusammen ein Antriebselement 16 bilden. Das Antriebselement 16 weist ein Gehäuse 18 auf, das Befestigungsarme 20 besitzt. Es kann aus Kunststoff im Spritzgussverfahren oder aus Metall im Druckgussverfahren hingestellt sein. An den Enden der Befestigungsarme 20 sind Befestigungselemente 22 mit einem u-förmigen Profil angeformt.

In der Aussparung 34 des u-förmigen Profils des Befestigungselements 22 ist ein Dämpfungselement 36 eingesetzt und mit dem Befestigungselement 22 fest verbunden. Das Dämpfungselement 36 nach Fig. 1 besitzt etwa mittig einen Bügel 38 mit einem Schlitz 40 zwischen zwei annähernd parallel verlaufenden Schenkeln 44 und 46.

Das Befestigungselement 22 wird in einer ersten Montagerichtung 30, die etwa senkrecht zur Zeichenebene der Fig. 1 und achsparallel zur Abtriebswelle 28 verläuft, in die Aufnahmeöffnung 24 eingesetzt, sodass die Öffnung des Schlitzes 40 einem Rand der Montageöffnung 24 gegenüberliegt. Danach wird das Befestigungselement 22 in einer zweiten Montagerichtung 32, die bei der Ausführung nach Fig. 1 einer Drehbewegung um die Abtriebswelle 28 entspricht, bewegt, wobei der Schlitz 40 den Rand der Aufnahmeöffnung übergreift, sodass die Scheibenwischvorrichtung 10 durch den Schlitz 40 an der Fahrzeugkarosserie 26 gehalten wird und gleichzeitig durch das Dämpfungselement 36 schwingungstechnisch von der Fahrzeugkarosserie 26 entkoppelt ist. Bei der Montage gleitet der Bügel 38, der eine härtere Oberfläche hat als das Dämpfungselement 36, leicht über das Karosserieblech der Fahrzeugkarosserie 26. Ferner wird die Montage dadurch erleichtert, dass der Schlitz 40 in der zweiten Montagerichtung 32 an seiner Öffnung eine keilförmige Erweiterung 42 aufweist, durch die der Rand der Aufnahmeöffnung selbst bei einer ungenauen Ausrichtung des Befestigungselements 22 sicher in den Schlitz 40 gelangt und dort mit einer Vorspannung gehalten wird.

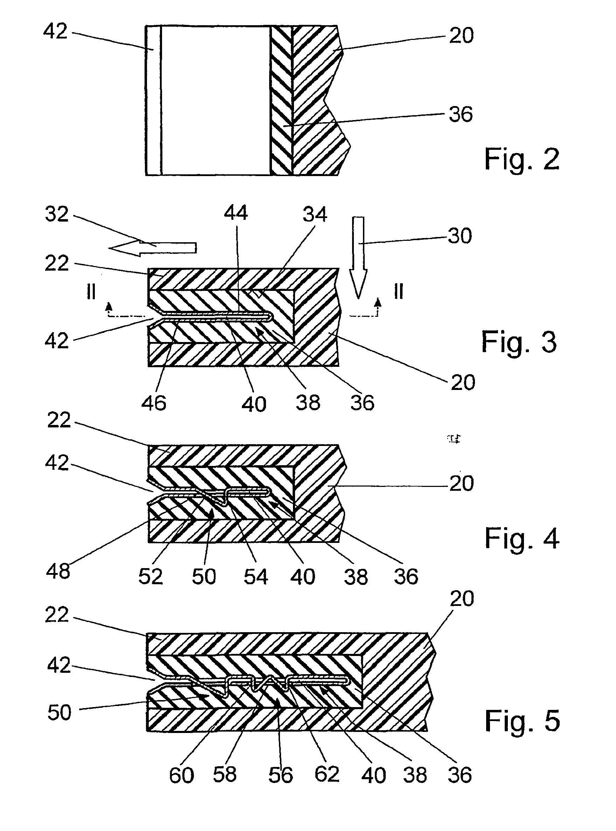

Die Scheibenwischvorrichtung 10 kann in der Endposition in der zweiten Montagerichtung 32 in beliebiger Weise fixiert werden, z.B. durch eine Arretierungsschraube oder einen Niet. Zweckmäßigerweise erfolgt dies jedoch durch eine Rastnase 50, die an dem einen Schenkel 44 des Bügels 38 angeformt ist und durch eine Öffnung 48 im gegenüberliegenden Schenkel 46 greift (Fig. 4). Wird der Rand 80 der Aufnahmeöffnung 24 durch die Erweiterung 42 in den Schlitz 40 geschoben, drückt sie über eine flach verlaufende Flanke 52 die Rastnase zurück, wobei das Dämpfungselement 36 entsprechend nachgibt. Erreicht der Rand der Aufnahmeöffnung 24 seine Endposition, rastet die Rastnase 50 in eine Rastöffnung, die in der zweiten Montagerichtung 32 versetzt zur Aufnahmeöffnung 24 angeordnet ist. Eine steilere Flanke 54 auf der der zweiten Montagerichtung 32 entgegengesetzten Seite der Rastnase 50 gewährleistet eine sichere Fixierung der Scheibenwischvorrichtung 10.

Bei der Ausführung nach Fig. 5 besitzt der Bügel 38 eine zweite Rastnase 56, die in der zweiten Montagerichtung 32 hinter der ersten Rastnase 50 liegt. Sie wird von zwei steilen Flanken 60, 62 in der zweiten Montagerichtung 32 begrenzt, die in eine Öffnung 58 des gegenüberliegenden Schenkels 46 eingreifen und eine präzise Positionierung der Scheibenwischvorrichtung 10 in einem entsprechenden, nicht dargestellten Rastloch der Fahrzeugkarosserie 26 ermöglichen. Dabei bewirkt die erste Rastnase 50 eine grobe Vorpositionierung, während die zweite Rastnase 56 die Scheibenwischvorrichtung 10 mit geringem Spiel in der zweiten Montagerichtung 32 fixiert.

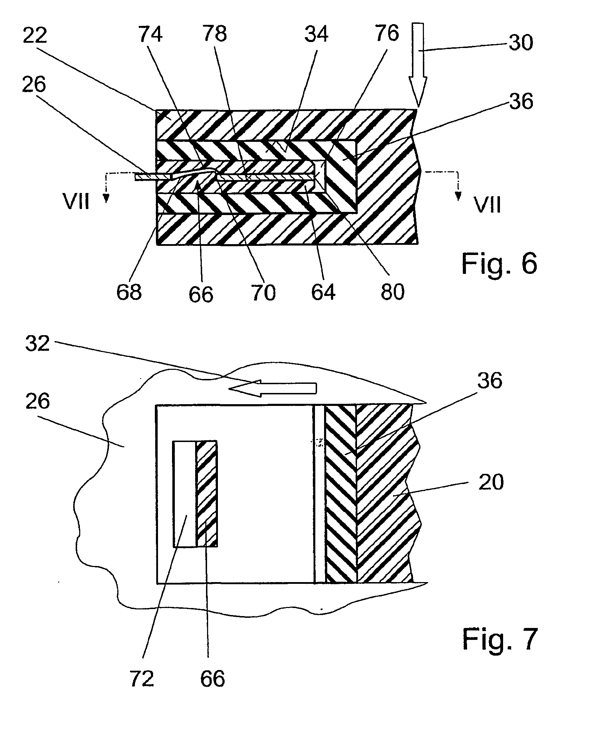

Die Ausführung nach Fig. 6 und 7 zeigt ein Dämpfungselement 36 mit einer Aussparung 76, in die ein Halteelement 64 aus Kunststoff eingesetzt ist. Dieses kann zweiteilig sein, wobei die beiden Teile so zueinander angeordnet und mit dem Dämpfungselement 36 fest verbunden sind, dass sie zwischen sich einen Schlitz 78 bilden, in den das Blech der Fahrzeugkarosserie 26 vom Rand 80 der Aufnahmeöffnung 24 eingeschoben werden kann. Dabei kann sich der Schlitz in der zweiten Montagerichtung 32 zu seiner Öffnung hin ebenfalls trichterförmig erweitern. Das Bauteil 64 besitzt an einer zum Schlitz 78 hin weisenden Fläche eine Rastnase 66, die im montierten Zustand durch eine Rastöffnung 72 in der Karosserie 26 in eine Vertiefung 74 auf der gegenüberliegenden Seite des Schlitzes 78 eingreift. Die Rastnase 66 weist in der zweiten Montagerichtung 32 eine vordere, flach verlaufende Flanke 68 und in der entgegengesetzten Richtung eine steil verlaufende Flanke 70 auf. Wird der Rand 80 der Aufnahmeöffnung 24 in den Schlitz 78 geschoben, wird die Rastnase 66 zurückgeschoben, wobei das Dämpfungselement 36 nachgibt. In der Endposition, wenn die Rastnase 66 in die Rastöffnung 72 einrastet, nimmt sie wieder ihre Ausgangsposition ein und blockiert das Befestigungselement in der Rastöffung 72.

## Patentansprüche

1. Scheibenwischvorrichtung (10), insbesondere für ein Kraftfahrzeug, mit mindestens einem an der Fahrzeugkarosserie (26) zu befestigenden Antriebselement (16) mit einer Abtriebswelle (28) und mindestens zwei Befestigungselementen (22), die in Aufnahmeöffnungen (24) an der Fahrzeugkarosserie (26) einzugreifen vermögen und jeweils zumindest ein Dämpfungselement (36) zur Dämpfung mechanischer Schwingungen aufweisen, und das Dämpfungselement (36) fest mit dem Befestigungselement (22) verbunden und in einer ersten Montagerichtung (30) in die Aufnahmeöffnungen (24) einsetzbar ist **dadurch gekennzeichnet, dass** durch eine Bewegung in eine zweite Montagerichtung (32) quer zur ersten den Rand (80) der Aufnahmeöffnung (24) mit einem Schlitz (40) übergreift, wobei der Schlitz (40) in einem Bauteil (38, 64) angeordnet ist, das eine relativ zum Dämpfungselement (36) harte Oberfläche aufweist und mit dem Dämpfungselement (36) fest verbunden ist.

2. Scheibenwischvorrichtung nach Anspruch 1, **dadurch gekennzeichnet, dass** der Schlitz (40) von einem Bügel (38) gebildet wird, in der zweiten Montagerichtung (32) offen ist und an seiner Öffnung eine Erweiterung (42) besitzt.

3. Scheibenwischvorrichtung (10) nach Anspruch 2, **dadurch gekennzeichnet, dass** der Bügel (38) zwei im Wesentlichen parallel verlaufende Schenkel (44, 46) hat, die den Schlitz (40) begrenzen und von denen einer (44) eine Rastnase (50) aufweist, die in eine Öffnung (48) des gegenüberliegenden Schenkels (46) eingreift. (Fig. 4)

4. Scheibenwischvorrichtung (10) nach Anspruch 3, **dadurch gekennzeichnet, dass** die Rastnase (50) in der zweiten Montagerichtung (32) eine flachere Flanke (52) und entgegen der zweiten Montagerichtung (32) eine steilere Flanke (54) besitzt.

5. Scheibenwischvorrichtung (10) nach Anspruch 4, **dadurch gekennzeichnet, dass** der Bügel (38) eine zweite Rastnase (56) besitzt, die in der zweiten Montagerichtung (32) hinter der ersten Rastnase (50) liegt und mit zwei steilen, quer zur zweiten Montagerichtung (32) verlaufenden Flanken (60, 62) in eine Öffnung (58) des gegenüberliegenden Schenkels (46) eingreift. (Fig. 5)

6. Scheibenwischvorrichtung (10) nach Anspruch 5, **dadurch gekennzeichnet, dass** die zweite Rastnase (56) im Längsschnitt des Bügels (38) eine m-förmige oder w-förmige Gestalt hat.

7. Scheibenwischvorrichtung (10) nach einem der vorhergehenden Ansprüche, **dadurch gekennzeichnet, dass** der Bügel (38) aus Kunststoff oder Blech gefertigt ist.

8. Scheibenwischvorrichtung (10) nach Anspruch 1, **dadurch gekennzeichnet, dass** in einer Aussparung (76) des Dämpfungselements (36) ein Halteelement (64) aus Kunststoff eingesetzt ist, das einen Schlitz (78) für die Aufnahme des Karosserieblechs besitzt, wobei eine Seite des Schlitzes (78) eine Rastnase (66) aufweist, die in eine Vertiefung (74) auf der gegenüberliegenden Seite des Schlitzes (78) ragt.

9. Scheibenwischvorrichtung (10) nach einem der vorhergehenden Ansprüche, **dadurch gekennzeichnet, dass** die zweite Montagerichtung (32) eine Drehrichtung um die Antriebswelle (28) oder um eine zur Antriebswelle (28) parallele Achse ist und die Rastnase (50, 56, 66) sich radial zur Antriebswelle (28) bzw. zur parallelen Achse erstreckt.

## Claims

1. Windscreen wiper device (10), in particular for a motor vehicle, with at least one drive element (16) which is to be fastened to the vehicle body (26) and has an output shaft (28), and with at least two fastening elements (22) which can engage in receiving openings (24) on the vehicle body (26) and each have at least one damping element (36) for damping mechanical vibrations, and the damping element (36) is connected fixedly to the fastening element (22) and, in a first installation direction (30), can be inserted into the receiving openings (24), **characterized in that** the damping element (36), by means of a movement in a second installation direction (32) transversely with respect to the first direction, fits over the edge (80) of the receiving opening (24) by means of a slot (40), the slot (40) being arranged in a component (38, 64) which has a hard surface relative to the damping element (36) and is connected fixedly to the damping element (36).

2. Windscreen wiper device according to Claim 1, **characterized in that** the slot (40) is formed by a clip (38), is open in the second installation direction (32) and has a widened portion (42) at its opening.

3. Windscreen wiper device (10) according to Claim 2, **characterized in that** the clip (38) has two limbs (44, 46) which run substantially parallel, bound the slot (40) and of which one (44) has a latching lug (50) which engages in an opening (48) in the opposite limb (46). (Fig. 4)

4. Windscreen wiper device (10) according to Claim 3, **characterized in that** the latching lug (50) has a flatter flank (52) in the second installation direction (32) and a steeper flank (54) counter to the second installation direction (32).

5. Windscreen wiper device (10) according to Claim 4, **characterized in that** the clip (38) has a second latching lug (56) which lies behind the first latching lug (50) in the second installation direction (32) and engages in an opening (58) in the opposite limb (46) by means of two steep flanks (60, 62) running transversely with respect to the second installation direction (32). (Fig. 5)

6. Windscreen wiper device (10) according to Claim 5, **characterized in that** the second latching lug (56) has an m-shaped or w-shaped design in the longitudinal section of the clip (38).

7. Windscreen wiper device (10) according to one of the preceding claims, **characterized in that** the clip (38) is manufactured from plastic or sheet metal.

8. Windscreen wiper device (10) according to Claim 1, **characterized in that** a plastic retaining element (64) is inserted in a cutout (76) of the damping element (36), said retaining element having a slot (78) for receiving the body sheet, with one side of the slot (78) having a latching lug (66) which projects into a depression (74) on the opposite side of the slot (78).

9. Windscreen wiper device (10) according to one of the preceding claims, **characterized in that** the second installation direction (32) is a direction of rotation about the drive shaft (28) or about an axis parallel to the drive shaft (28), and the latching lug (50, 56, 66) extends radially to the drive shaft (28) or to the parallel axis.

## Revendications

1. Système d'essuie-glace (10), notamment pour un véhicule automobile, comprenant au moins un élément d'entraînement (16) à fixer à la carrosserie du véhicule (26), avec un arbre de sortie (28) et au moins deux éléments de fixation (22) qui peuvent s'engager dans des ouvertures de réception (24) sur la carrosserie du véhicule (26), et qui présentent chacun au moins un élément d'amortissement (36) pour l'amortissement des oscillations mécaniques, l'élément d'amortissement (36) étant connecté fixement à l'élément de fixation (22) et pouvant être inséré dans une première direction de montage (30) dans les ouvertures de réception (24), **caractérisé en ce que** l'élément d'amortissement vient en prise, par un mouvement dans une deuxième direction de montage (32) transversalement à la première, avec le bord (80) de l'ouverture de réception (24) avec une fente (40), la fente (40) étant pratiquée dans un composant (38, 64) qui présente une surface dure par rapport à l'élément d'amortissement (36) et qui est connecté fixement à l'élément d'amortissement (36).

2. Système d'essuie-glace selon la revendication 1, **caractérisé en ce que** la fente (40) est formée par une bride (38), est ouverte dans la deuxième direction de montage (32) et possède un élargissement (42) au niveau de son ouverture.

3. Système d'essuie-glace (10) selon la revendication 2, **caractérisé en ce que** la bride (38) a deux branches (44, 46) s'étendant essentiellement parallèlement, qui limitent la fente (40) et dont l'une (44) présente un ergot d'encliquetage (50), qui vient en prise dans une ouverture (48) de la branche opposée (46). (Figure 4).

4. Système d'essuie-glace (10) selon la revendication 3, **caractérisé en ce que** l'ergot d'encliquetage (50) présente dans la deuxième direction de montage (32) un flanc plus plat (52) et dans la direction opposée à la deuxième direction de montage (32) un flanc plus raide (54).

5. Système d'essuie-glace (10) selon la revendication 4, **caractérisé en ce que** la bride (38) possède un deuxième ergot d'encliquetage (56) qui se trouve, dans la deuxième direction de montage (32), derrière le premier ergot d'encliquetage (50) et vient en prise, par deux flancs raides (60, 62) s'étendant transversalement à la deuxième direction de montage (32), dans une ouverture (58) de la branche opposée (46). (Figure 5).

6. Système d'essuie-glace (10) selon la revendication 5, **caractérisé en ce que** le deuxième ergot d'encliquetage (56) a une forme en m ou en w en coupe longitudinale de la bride (38).

7. Système d'essuie-glace (10) selon l'une quelconque des revendications précédentes, **caractérisé en ce que** la bride (38) est fabriquée en plastique ou en tôle.

8. Système d'essuie-glace (10) selon la revendication 1, **caractérisé en ce qu'**un élément de retenue (64) en plastique est inséré dans un évidement (76) de l'élément d'amortissement (36), et possède une fente (78) pour recevoir la tôle de carrosserie, un côté de la fente (78) présentant un ergot d'encliquetage (66) qui pénètre dans un renfoncement (74) sur le côté opposé de la fente (78).

9. Système d'essuie-glace (10) selon l'une quelconque des revendications précédentes, **caractérisé en ce que** la deuxième direction de montage (32) est une direction de rotation autour de l'arbre d'entraînement (28) ou autour d'un axe parallèle à l'arbre d'entraînement (28), et l'ergot d'encliquetage (50, 56, 66) s'étend radialement par rapport à l'arbre d'entraînement (28) ou à l'axe parallèle.
